# EUROPÄISCHE PATENTSCHRIFT

(11) **EP 2 507 771 B1**
(45) Veröffentlichungstag und Bekanntmachung des Hinweises auf die Patenterteilung: **21.10.2020**
(21) Anmeldenummer: 10798025.2
(22) Anmeldetag: 03.12.2010
(51) Int. Cl.: G07D 11/00

(54) **VORRICHTUNG ZUR HANDHABUNG VON WERTSCHEINEN**
DEVICE FOR HANDLING VALUE DOCUMENTS
DISPOSITIF DE MANIPULATION DE BILLETS DE VALEUR

(30) Priorität: 04.12.2009 DE 102009057068
(43) Veröffentlichungstag der Anmeldung: 10.10.2012
(73) Patentinhaber: Wincor Nixdorf International GmbH, 33106 Paderborn (DE)
(72) Erfinder: FEHRENBACH, Christian, 78136 Schonach (DE)
(86) Internationale Anmeldenummer: PCT/EP2010/068827
(87) Internationale Veröffentlichungsnummer: WO 2011/067374

(56) Entgegenhaltungen:
- EP-A1- 0 265 574
- EP-A1- 0 692 599
- EP-A2- 0 164 733
- WO-A1-97/31342
- WO-A1-2009/013765
- WO-A2-01/54078
- DE-U1- 20 100 426
- US-A1- 2009 104 814

## Beschreibung

Die Erfindung betrifft eine Vorrichtung zur Handhabung von Wertscheinen, die eine zentrale Spannungsversorgungseinheit umfasst, die mit einem ersten Ende einer ersten elektrischen Leitung zur Übertragung von elektrischer Energie mit einem ersten Modul elektrisch leitend verbunden ist, wobei das dem ersten Ende entgegengesetzte zweite Ende der ersten elektrischen Leitung mit einem ersten Steckverbinder verbunden ist. Ferner hat die Vorrichtung mindestens ein zweites Modul, das mit einem ersten Ende einer zweiten elektrischen Leitung zur Übertragung von elektrischen Signalen zwischen dem ersten und zweiten Modul elektrisch leitend verbunden ist, wobei das dem ersten Ende entgegengesetzte zweite Ende der zweiten elektrischen Leitung mit einem zweiten Steckverbinder verbunden ist. In einem Betriebszustand ist das erste Modul elektrisch leitend mit der ersten elektrischen Leitung und der zweiten elektrischen Leitung verbunden, wohingegen in einem Wartungszustand das Modul weder mit der ersten noch mit der zweiten elektrischen Leitung elektrisch leitend verbunden ist.

Bei der Vorrichtung handelt es sich insbesondere um einen Geldautomaten, ein automatisches Kassensystem und/oder eine automatische Tresorkasse zur Einzahlung und/oder Auszahlung von Wertscheinen. Diese Vorrichtungen umfassen jeweils mehrere Geldkassetten, vorzugsweise vier Geldkassetten, in denen die eingezahlten Wertscheine aufgenommen werden und aus denen die auszuzahlenden Wertscheine entnommen werden. Jeder dieser Geldkassetten ist jeweils ein Vereinzelungs- und/oder Stapelmodul zugeordnet, das aus den Geldkassetten Wertscheine entnimmt und den Geldkassetten Wertscheine zuführt. Jedes Vereinzelungsmodul ist über mehrere elektrische Leitungen mit einer zentralen Steuerungseinheit, einer Spannungsversorgungseinheit, der jeweiligen Geldkassette und benachbarten Vereinzelungs- und/oder Stapelmodulen verbunden, wobei über diese elektrischen Leitungen elektrische Signale, insbesondere Steuerungssignale und/oder Daten, und elektrische Energie zur Versorgung von in dem Vereinzelungs- und/oder Stapelmodul und/oder der Geldkassette vorhandenen elektrischen Verbrauchern übertragen werden.

Bei bekannten Geldautomaten werden die einzelnen elektrischen Leitungen jeweils über einen eigenen Steckverbinder auf einen entsprechenden komplementären Steckverbinder einer Controllerkarte des Vereinzelungs- und/oder Stapelmoduls aufgesteckt. Für die Wartung des Geldautomaten, der automatischen Tresorkasse und/oder dem automatischen Kassensystem müssen die Geldkassetten und die mit ihnen verbundenen Vereinzelungs- und/oder Stapelmodule aus der Vorrichtung entnommen werden und die Steckverbinder aller elektrischen Leitungen einzeln abgezogen werden und später nach der Wartung vor der Inbetriebnahme der Vorrichtung wieder auf die Controllerkarte aufgesteckt werden. Dieses Aufstecken der Steckverbinder auf die Controllerkarte nach der Wartung ist aufwendig und zeitintensiv, da die Vereinzelungsmodule, insbesondere die Controllerkarten der Vereinzelungsmodule nur schlecht zugänglich sind und der beauftragte Servicemitarbeiter häufig ohne Sichtkontakt durch Ertasten die Steckverbinder aufstecken muss.

Aus dem Dokument EP 0 164 733 A2 ist eine Banknotenauszahlmaschine bekannt, in der eine Kassette mit mehreren Komponenten, wie einer Steuereinheit, einer Kupplung, einer Bremse und einer Codierungseinheit enthalten sind.

Dokument DE 201 00 426 U1 offenbart einen Banknotenbehälter zur Verwendung in einem Geldein-/-ausgabeautomaten. Der Behälter umfasst einen Sicherungsmechanismus, der bei unautorisierter Manipulation des Banknotenbehälters die in dem Banknotenbehälter enthaltenen Banknoten unbrauchbar macht. Dokument WO 01/54078 A2 offenbart einen Geldautomaten, dem ein Behälter zugeführt wird, der mehrere Speichereinheiten zur Aufnahme von Wertscheinen umfasst. Dieser Behälter hat eine Steuereinheit zum Steuern der im Behälter enthaltenen Funktionseinheiten. Es ist eine Schnittstelle zum Verbinden der Steuereinheit des Behälters mit einer Steuereinheit des Geldautomaten vorgesehen.

Dokument EP 0 692 599 A1 offenbart ein System zum sicheren Transport von Artikeln, wie Schecks und Banknoten. Über ein sogenanntes smart box interface wird der Behälter mit einer Docking Station verbunden.

Dokument WO 97/31342 A1 offenbart eine Vorrichtung zum Speichern von Einzelblättern, bei der Verbinder zum Verbinden eines Einzelblattspeichers mit einer Aufnahmeeinheit vorgesehen sind.

Dokument WO 2009/013765 A1 offenbart eine Vorrichtung zur Aufnahme und zum Transport von wertvollen Gegenständen, wie Schmuck und Uhren, die zum Verkauf vorgesehen sind. Hierbei wird jeder Gegenstand mit einem Datenschild versehen, wobei das Schild einen Speicher enthält, der drahtlos auslesbar ist. Zwischen einer Aufbewahrungseinheit zur Aufnahme der wertvollen Gegenstände und einer Aufnahmestruktur zur Aufnahme der Aufbewahrungseinheit erfolgt sowohl die Spannungsversorgung der Aufbewahrungseinheit als auch die Datenübertragung über eine Steckverbinderanordnung. Dokument EP 0 265 574 offenbart über eine verkettete Verbindung (daisy-chain) verbundene Adapter. Die Adapter sind Netzwerkadapter, d.h. Netzwerkteilnehmer, die gemeinsam über diese daisy-chain mit einer zentralen Einheit (CCU) kommunizieren sollen.

Dokument US 2009/104814 A1 offenbart einen T-förmigen BUS-Adapter.

Es ist Aufgabe der Erfindung, eine Vorrichtung zur Handhabung von Wertscheinen anzugeben, die auf einfache Weise gewartet werden kann.

Diese Aufgabe wird durch eine Vorrichtung mit den Merkmalen des Anspruchs 1 gelöst. Vorteilhafte Weiterbildungen der Erfindung sind in den abhängigen Patentansprüchen angegeben.

Erfindungsgemäß umfasst die Vorrichtung einen Adapter, der einen komplementär zum ersten Steckverbinder ausgebildeten dritten Steckverbinder, einen komplementär zum zweiten Steckverbinder ausgebildeten vierten Steckverbinder und mindestens einen fünften Steckverbinder umfasst, wobei der fünfte Steckverbinder elektrisch leitend mit dem dritten Steckverbinder und elektrisch leitend mit dem vierten Steckverbinder verbunden ist. Das Modul wiederrum umfasst einen komplementär zum fünften Steckverbinder ausgebildeten sechsten Steckverbinder, wobei im Betriebszustand die Kontaktelemente des fünfte Steckverbinders mit den Kontaktelementen des sechsten Steckverbinders elektrisch leitend verbunden sind und zwischen dem fünften und dem sechsten Steckverbinder sowohl die über die erste elektrische Leitung übertragbare Energie als auch die über die zweite elektrische Leitung übertragbaren elektrischen Signale übertragbar sind. Hierdurch wird erreicht, dass zum Herstellen der elektrischen Verbindung zwischen dem ersten Modul und der Spannungsversorgungseinheit über die erste elektrische Leitung und zum Herstellen der elektrischen Verbindung zwischen dem ersten Modul und dem zweiten Modul über die zweite elektrische Leitung lediglich ein Steckverbinder an das erste Modul, insbesondere an den sechsten Steckverbinder des ersten Moduls, angesteckt werden muss. Auf diese Weise kann bei der Wartung das erste Modul auf einfache und schnelle Weise von den beiden elektrischen Leitungen getrennt werden und nach der Wartung wieder auf einfache Weise mit beiden elektrischen Leitungen verbunden werden.

Es ist insbesondere vorteilhaft, wenn die Steckverbindung zwischen dem Adapter und der ersten elektrischen Leitung über den ersten und den dritten Steckverbinder sowie die Steckverbindung zwischen dem Adapter und der zweiten elektrischen Leitung über den zweiten Steckverbinder und dem vierten Steckverbinder auch beim Wartungsbetriebszustand dauerhaft bestehen bleibt, indem die Steckverbindung zwischen dem ersten und dem dritten Steckverbinder sowie die Steckverbindung zwischen dem zweiten und dem vierten Steckverbinder nur einmal bei der Montage der Vorrichtung hergestellt wird und der Adapter ansonsten dauerhaft mit der ersten elektrischen Leitung und der zweiten elektrischen Leitung verbunden ist, unabhängig davon, ob sich die Vorrichtung im Wartungszustand oder im Betriebszustand befindet. Insgesamt wird somit über den Adapter eine einfache und schnelle Wartung der Vorrichtung ermöglicht, wodurch Zeit und Kosten eingespart werden. Gerade bei wartungsintensiven Geräten, insbesondere bei Geldautomaten, automatischen Kassensystem und/oder automatischen Tresorkassen, kann hiermit ein beträchtlicher Aufwand eingespart werden.

Das erste Modul ist ein Vereinzelungs- und/oder Stapelmodul zum Zuführen von Wertscheinen zu einer Geldkassette und/oder zur Entnahme von Wertscheinen aus der Geldkassette. Bei der Vorrichtung handelt es sich in diesem Fall insbesondere um einen Geldautomaten, ein automatisches Kassensystem und/oder eine automatische Tresorkasse. Solche Vereinzelung- und Stapelmodule müssen regelmäßig gewartet werden, um den regulären Betrieb zu gewährleisten und Wertscheinstaus vorzugbeugen. Im Unterschied zu bekannten Geldautomaten, automatischen Kassensystem und/oder automatischen Tresorkassen, bei denen jede zu verbindende elektrische Leitung nach der Wartung einzeln an das Modul angesteckt werden muss, muss durch das Vorsehen des Adapters nur noch ein Steckverbinder mit dem Vereinzelungs- und/oder Stapelmodul verbunden werden.

Die zweite elektrische Leitung ist insbesondere eine Datenleitung zum Bereitstellen einer BUS-Verbindung zwischen dem ersten Modul und dem zweiten Modul. Das zweite Modul ist insbesondere ebenfalls ein Vereinzelungs- und/oder Stapelmodul, welches über die zweite elektrische Leitung mit dem ersten Vereinzelungs- und/oder Stapelmodul verbunden ist. Über die Datenleitung werden insbesondere Steuerungsinformationen zu Ansteuerung der Vereinzelungs- und/oder Stapelmodule übertragen.

Bei einer bevorzugten Ausführungsform der Erfindung sind der dritte, der vierte und der fünfte Steckverbinder auf einer Leiterplatte angeordnet, wobei sowohl der dritte mit dem fünften als auch der vierte mit dem fünften Steckverbinder jeweils über die Leiterbahn der Leiterplatte elektrisch leitend verbunden ist. Auf diese Weise wird eine kompakte Bauweise des Adapters erreicht und eine sichere und einfache elektrische Verbindung des vierten Steckverbinders mit dem fünften Steckverbinder und des dritten Steckverbinders mit dem fünften Steckverbinder erreicht. Bei einer besonders bevorzugten Ausführungsform der Erfindung ist auch der sechste Steckverbinder auf einer Leiterplatte des Vereinzelung- und Stapelmoduls angeordnet. Bei dieser Leiterplatte handelt es sich insbesondere um eine Controllerkarte des Vereinzelungs- und/oder Stapelmoduls.

Die Länge der den vierten Steckverbinder mit dem fünften Steckverbinder verbindenden Leiterbahn ist möglichst gering ausgebildet, sodass nur geringe Übertragungsverluste und Störeinflüsse bei der Übertragung der über die zweite elektrische Leitung übertragenen elektrischen Signale zwischen dem vierten Steckverbinder und dem fünften Steckverbinder auftreten. Die Länge der den vierten mit dem fünften Steckverbinder verbindenden Leiterbahn hat insbesondere einen Wert im Bereich zwischen 5 mm und 50 mm, vorzugsweise im Bereich zwischen 8 mm und 20 mm.

Der Abstand zwischen dem dritten Steckverbinder und dem vierten Steckverbinder ist dahingegen so groß wie möglich gewählt, sodass sich die über den vierten Steckverbinder übertragenen elektrischen Signale und die über den dritten Steckverbinder übertragene elektrische Energie gegenseitig nicht oder nur geringfügig beeinflussen, und somit eine hohe Übertragungsqualität der elektrischen Signale sichergestellt ist. Der Abstand hat insbesondere einen Wert im Bereich zwischen 40 mm und 70 mm, vorzugsweise im Bereich zwischen 45 mm und 60 mm. Hierdurch wird zum einen eine kompakte Bauweise des Adapters ermöglicht, und zum anderen ein ausreichend großer Abstand zwischen dem dritten Steckverbinder und dem vierten Steckverbinder sichergestellt.

Bei der Erfindung ist die Geldkassette, die dem ersten Modul zugeordnet ist, mit einem ersten Ende einer dritten elektrischen Leitung zur Übertragung von elektrischer Energie und/oder Steuerungssignalen verbunden. Das dem ersten Ende entgegengesetzte zweite Ende der dritten elektrischen Leitung ist mit einem siebten Steckverbinder verbunden, wobei der Adapter einen elektrisch leitend mit dem fünften Steckverbinder verbundenen komplementär zum siebten Steckverbinder ausgebildeten achten Steckverbinder umfasst. Über die zwischen dem fünften und dem sechsten Steckverbinder im Betriebszustand vorhandene Verbindung sind die über die dritte elektrische Leitung übertragbare Energie und/oder die übertragbaren Steuerungssignals übertragbar. Durch diese Ausführungsform wird erreicht, dass das erste Modul über den Adapter nicht nur mit einer ersten und einer zweiten elektrischen Leitung sondern zusätzlich mit einer dritten elektrischen Leitung und somit mit der Geldkassette verbunden ist.

Bei einer bevorzugten Ausführungsform der Erfindung umfasst die Vorrichtung ein drittes Modul, insbesondere ein Vereinzelungs- und/oder Stapelmodul, das mit einem ersten Ende einer vierten elektrischen Leitung zur Übertragung von elektrischen Signalen zwischen dem ersten und dem dritten Modul elektrisch leitend verbunden ist. Ein dem ersten Ende entgegengesetztes zweites Ende der vierten elektrischen Leitung ist mit einem neunten Steckverbinder verbunden, wobei der Adapter einen elektrisch leitend mit dem fünften Steckverbinder verbundenen komplementär zum neunten Steckverbinder ausgebildeten zehnten Steckverbinder umfasst und über die zwischen dem fünften und sechsten Steckverbinder im Betriebszustand ausgebildete Steckverbindung die über die vierte elektrische Leitung übertragbaren elektrischen Signale übertragbar sind. Bei dieser Ausführungsform der Erfindung kann das erste Modul somit über den Adapter mit einem weiteren Modul verbunden werden, sodass über den Adapter insgesamt die elektrische Energie, die elektrischen Signale, die Daten und die Steuerungssignale von vier elektrischen Leitungen übertragbar sind.

Bei einer besonders bevorzugten Ausführungsform der Erfindung werden alle elektrischen Signale und die zum Betreib erforderliche Energie, die an das erste Modul zu übertragen werden bzw. von dem ersten Modul ausgesandt werden über die zwischen dem fünften und sechsten Steckverbinder ausgebildete Steckverbindung und somit über den Adapter übertragen. Hierdurch wird erreicht, dass nach der Wartung lediglich eine Steckverbindung durch das Aufstecken des fünften Steckverbinders des Adapters auf den sechsten Steckverbinder des ersten Moduls hergestellt werden muss, und somit eine schnelle und einfache Wiederinbetriebnahme der Vorrichtung gewährleistet ist.

Bei einer weiteren bevorzugten Ausführungsform der Erfindung umfasst die Vorrichtung vier Geldkassetten, denen jeweils ein Vereinzelungs- und/oder Stapelmodul zugeordnet ist. Jedes dieser Vereinzelungs- und/oder Stapelmodule ist über jeweils einen zuvor beschriebenen Adapter mit der Vorrichtung und/oder untereinander verbunden, wobei alle zwischen der Vorrichtung und dem jeweiligen Vereinzelungs- und/oder Stapelmodul zu übertragenden elektrischen Signale und die zum Betreib notwendige elektrische Energie über diesen Adapter übertragen werden.

Ferner ist es vorteilhaft, wenn das erste Modul ein erstes Abdeckelement und der Adapter ein zweites Abdeckelement umfasst, und wenn im Betriebszustand das erste Abdeckelement und das zweite Abdeckelement miteinander verbunden sind und wenn im Wartungszustand die beiden Abdeckelemente voneinander getrennt sind. Durch die Abdeckelemente wird erreicht, dass sowohl die Leiterplatte des ersten Moduls als auch die Leiterplatte des Adapters geschützt sind. Ferner wird hierdurch erreicht, dass der Adapter einfacher zu handhaben ist. Hierzu ist die zweite Abdeckplatte insbesondere derart ausgebildet, dass sie leicht zu handhaben ist, insbesondere einen Griff und/oder eine Griffmulde aufweist.

Es ist vorteilhaft, wenn das erste Abdeckelement ein elastisches erstes Verbindungselement umfasst und das zweite Abdeckelement ein komplementär zum ersten Verbindungselement ausgebildetes zweites Verbindungselement umfasst. Im Betriebszustand sind das erste und das zweite Abdeckelement über eine zwischen dem ersten und dem zweiten Verbindungselement ausgebildete Clip-Verbindung miteinander verbunden. Auf diese Weise wird erreicht, dass die beiden Abdeckelemente und somit der Adapter und das erste Modul auf einfache Weise miteinander verbunden werden können, sodass nach einer Wartung der Adapter auf einfache Weise wieder an das erste Modul angesteckt werden kann. Die Clip-Verbindung ist insbesondere derart ausgebildet, dass sich die Clip-Verbindung durch ein entsprechendes elastisches Verformen des elastischen ersten Verbindungselements zerstörungsfrei wieder lösen lässt, sodass die Clip-Verbindung für die Wartung gelöst werden kann und nach der Wartung ohne Austausch von Teilen wiederhergestellt werden kann. Bei einer alternativen Ausführungsform der Erfindung kann auch das zweite Verbindungselement zusätzlich oder alternativ elastisch ausgebildet sein.

Die Clip-Verbindung ist insbesondere derart ausgebildet, dass das zweite Verbindungselement eine Nut umfasst und das erste Verbindungselement ein komplementär zur Nut ausgebildetes Eingriffelement hat, wobei das Eingriffselement im verbundenen Zustand, also dem Zustand, in dem die Clip-Verbindung hergestellt ist, in die Nut eingreift. Durch ein elastisches Verformen des ersten Verbindungselements wird das Eingriffelement wieder aus der Nut bewegt, sodass die Clip-Verbindung zwischen dem ersten und dem zweiten Abdeckelement gelöst werden kann.

Bei einer alternativen Ausführungsform der Erfindung können das erste und das zweite Abdeckelement alternativ oder zusätzlich auch über eine Steck- und/oder Rastverbindung verbindbar sein.

Das erste Verbindungselement ist insbesondere als eine seitlich vom ersten Abdeckelement abstehende Nase ausgebildet, wobei sich die Nase vorzugsweise in die dem ersten Abdeckelement abgewandten Richtung verjüngt. Hierdurch wird erreicht, dass beim Aufstecken des Adapters an das erste Modul durch das erste und das zweite Verbindungselement eine Führung des Adapters relativ zum ersten Modul erreicht wird, sodass die Steckverbindung zwischen dem fünften und dem sechsten Steckverbinder auf einfache Weise hergestellt werden kann. Durch die Verjüngung des ersten Verbindungselements wird hierbei insbesondere erzielt, dass der Adapter beim Aufstecken nur so bewegt werden kann, dass wenn die Clip-Verbindung hergestellt ist, auch die Steckverbindung zwischen dem fünften und dem sechsten Steckverbinder automatisch besteht. Hierdurch wird erreicht, dass der Adapter nach der Wartung einfach und zielsicher wieder aufgesteckt werden kann, ohne dass hierfür der Servicemitarbeiter, der mit der Wartung der Vorrichtung beauftragt ist, die Stelle, an der der Adapter angesteckt wird, einsehen können muss. Hierdurch wird erzielt, dass auch an schwer zugänglichen und nicht einsehbaren Stellen das erste Modul auf einfache Weise über den Adapter mit allen für den regulären Betrieb des Moduls erforderlichen elektrischen Leitungen verbindbar ist.

Ferner ist es vorteilhaft, wenn das erste Abdeckelement ein erstes Führungselement umfasst und der Adapter ein komplementär zum ersten Führungselement ausgebildetes zweites Führungselement hat. Beim Verbinden des ersten Abdeckelements und des zweiten Abdeckelements sind das erste und das zweite Führungselement zumindest zweitweise miteinander in Eingriff, sodass das erste und das zweite Abdeckelement durch den Kontakt zwischen dem ersten und dem zweiten Führungselement relativ zueinander geführt sind. Auf diese Weise wird zusätzlich zu der durch das erste und das zweite Verbindungselement beim Aufstecken des Adapters bewirkten Führung eine zusätzliche Führung des Adapters relativ zum ersten Modul erreicht. Durch das erste und das zweite Verbindungselement wird insbesondere eine Grobführung erreicht, durch die der Adapter zunächst beim Aufstecken des Adapters geführt wird, wohingegen durch das erste und das zweite Führungselement eine Feinführung erreicht wird, durch die der Adapter am Ende des Aufsteckens, also kurz bevor und während die Steckverbindung zwischen dem fünften und dem sechsten Steckverbinder hergestellt wird, geführt wird. Hierdurch wird sichergestellt, dass die Steckverbindung zwischen dem fünften und dem sechsten Steckverbinder auch dann zuverlässig und auf einfache Weise hergestellt werden kann, wenn kein Sichtkontakt beim Aufstecken des Adapters besteht und/oder wenn ein begrenzter Bauraum zur Verfügung steht.

Zusätzlich oder alternativ zu dem ersten und dem zweiten Führungselement kann das zweite Abdeckelement ein drittes Führungselement und das erste Modul ein komplementär zum dritten Führungselement ausgebildetes viertes Führungselement umfassen, wobei beim Verbinden des ersten und des zweiten Abdeckelementes das dritte und das vierte Führungselement zumindest zeitweise miteinander in Eingriff sind und das erste Abdeckelement und das zweite Abdeckelement durch den Kontakt zwischen dem dritten und dem vierten Führungselement relativ zueinander geführt sind. Durch das Vorsehen von vier Führungselementen wird eine doppelte Feinführung des Adapters relativ zum ersten Modul beim Aufstecken des Adapters erreicht. Hierbei sind die Führungselemente insbesondere derart angeordnet, dass die durch das erste und das zweite Führungselement bewirkte erste Feinführung und die durch das dritte und vierte Führungselement bewirkte zweite Feinführung auf gegenüberliegenden Seiten der zwischen dem fünften und dem sechsten Steckverbinder erzeugten Steckverbindung angeordnet sind. Hierdurch wird eine möglichst gleichmäßige sichere Führung beim Aufstecken des Adapters auf das erste Modul erreicht.

Das erste und/oder das dritte Führungselement umfassen insbesondere jeweils eine Nut, wohingegen das zweite Führungselement als Schlitz in einer Leiterplatte des Adapters ausgebildet ist, in dem das erste Führungselement beim Verbinden des ersten Abdeckelements und des zweiten Abdeckelements eingreift, sodass die Nut des ersten Führungselements in diesem Schlitz geführt ist. Ebenso ist das vierte Führungselement insbesondere als Schlitz in einer Leiterplatte des Moduls ausgebildet, in den das dritte Führungselement beim Verbinden des ersten Abdeckelements und des zweiten Abdeckelements eingreift, sodass die Nut des dritten Führungselements in diesem Schlitz geführt ist. Auf diese Weise wird eine einfache und sichere Führung des Adapters relativ zum Modul sichergestellt.

Weitere Merkmale und Vorteile der Erfindung ergeben sich aus der folgenden Beschreibung, die die Erfindung im Zusammenhang mit den beigefügten Figuren anhand von Ausführungsbeispielen näher erläutert:
Es zeigen:
- Figur 1: eine schematische perspektivische Darstellung eines Geldautomaten in einem Betriebszustand;
- Figur 2: eine schematische perspektivische Darstellung des Geldautomaten nach Figur 1 in einem Wartungszustand;
- Figur 3: eine schematische perspektivische Darstellung einer Controllerkarte und eines Abdeckelements eines Vereinzelungs- und/oder Stapelmoduls und eines Adapters in einem unverbundenen Zustand mit Blick auf die dem Vereinzelungs- und/oder Stapelmodul zugewandte Innenseite;
- Figur 4: eine schematische perspektivische Darstellung der Controllerkarte des Vereinzelungs- und/oder Stapelmoduls, des Abdeckelements des Vereinzelungsund/oder Stapelmoduls sowie des Adapters nach Figur 3 im unverbundenen Zustand mit Blick auf die der Innenseite entgegengesetzte Außenseite;
- Figur 5: eine schematische perspektivische Darstellung der Controllerkarte des Vereinzelungs- und/oder Stapelmoduls, des Abdeckelements des Vereinzelungsund/oder Stapelmoduls und des Adapters nach den Figuren 3 und 4 in einem verbundenen Zustand mit Blick auf die Außenseite;
- Figur 6: eine schematische perspektivische Darstellung der Controllerkarte des Vereinzelungs- und/oder Stapelmoduls, des Abdeckelements des Vereinzelungsund/oder Stapelmoduls und des Adapters im verbundenen Zustand mit Blick auf die Innenseite;
- Figur 7: eine schematische perspektivische Darstellung der Controllerkarte;
- Figur 8: eine schematische perspektivische Darstellung des Abdeckelements des Vereinzelungs- und/oder Stapelmoduls;
- Figur 9: eine schematische perspektivische Darstellung einer Leiterplatte des Adapters;
- Figur 10: eine schematische perspektivische Darstellung eines Abdeckelements des Adapters; und
- Figur 11: eine schematische perspektivische Darstellung eines Führungselements des Abdeckelements des Vereinzelungs- und/oder Stapelmoduls.

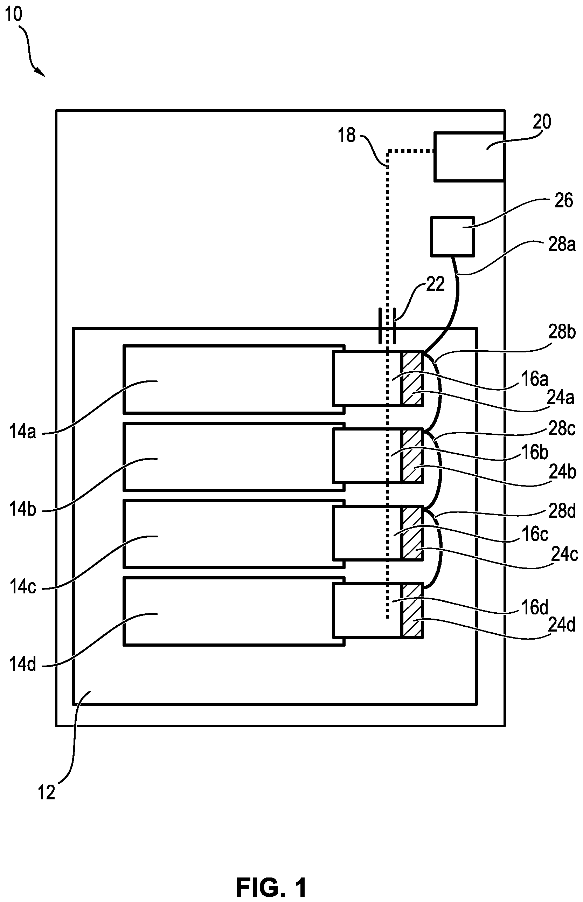

In Figur 1 ist eine schematische Darstellung eines Geldautomaten 10 in einem Betriebszustand gezeigt. Alternativ kann es sich bei der Vorrichtung auch um ein automatisches Kassensystem oder eine automatische Tresorkasse handeln. Der Betriebszustand ist derjenige Zustand, in dem Wertscheine in den Geldautomaten 10 eingezahlt und/oder aus dem Geldautomaten 10 ausgezahlt werden können.

Der Geldautomat 10 umfasst einen Tresor 12, in dem vier Geldkassetten 14a bis 14d aufgenommen sind. Alternativ können in den Tresor 12 auch mehr oder weniger als vier Geldkassetten 14a bis 14d aufgenommen sein. Diesen Geldkassetten 14a bis 14d ist jeweils ein Vereinzelungs- und/oder Stapelmodul 16a bis 16d zugeordnet, mit dessen Hilfe Wertscheine aus der entsprechenden Geldkassette 14a bis 14d entnommen werden können sowie der entsprechenden Geldkassette 14a bis 14d zugeführt werden können. Bei einer alternativen Ausführungsform der Erfindung kann es sich bei dem Geldautomaten 10 auch, anders als zuvor beschrieben, nicht um ein Ein- und Auszahlungsgeldautomaten, sondern um einen reinen Einzahlungs- oder einen reinen Auszahlungsautomaten handeln. In diesem Fall werden die Wertscheine den Geldkassetten 14a bis 14d lediglich zugeführt bzw. lediglich aus den Geldkassetten 14a bis 14d entnommen.

Die aus den Geldkassetten 14a bis 14d mit Hilfe der Vereinzelungs- und/oder Stapelmodule 16a bis 16d entnommenen Geldkassetten 14a bis 14d werden über einen Transportpfad 18 durch einen Übergabeschlitz 22 aus dem Tresor 12 hinaus und zu einem Ein- und Ausgabefach 20 transportiert, wo sie der Bedienperson des Geldautomaten 10 übergeben werden. Die über das Ein- und Ausgabefach 20 eingezahlten Wertscheine werden umgekehrt über den Transportpfad 18 durch den Übergabeschlitz 22 mit Hilfe der Vereinzelungs- und/oder Stapelmodule 16a bis 16d den Geldkassette 14a bis 14d zugeführt. Hierbei kann die Speicherung der Wertscheine innerhalb der Geldkassette 14a bis 14d sortenrein erfolgen oder eine Mischspeicherung genutzt werden.

Jedes Vereinzelungs- und/oder Stapelmodul 16a bis 16d hat jeweils eine mindestens eine Leiterplatte umfassende Controllerkarte, die in Figur 1 nicht sichtbar sind, da sie durch jeweils eine Abdeckplatte 24a bis 24d verdeckt sind. Der Aufbau der Controllerkarten wird später noch genauer beschrieben. Die Abdeckelemente 24a bis 24d der Vereinzelungs- und/oder Stapelmodule 16a bis 16d dienen zum Schutz der Controllerkarten sowie der weiteren Bauelemente des Vereinzelungs- und/oder Stapelmoduls 16a bis 16d. Die Abdeckelemente 24a bis 24d sind hierzu mit der jeweiligen Controllerkarte und/oder dem Gehäuse des jeweiligen Vereinzelungs- und/oder Stapelmoduls 16a bis 16d, insbesondere über Schrauben, verbunden. Ferner umfasst der Geldautomat 10 eine zentrale Steuerungseinheit 26, mit deren Hilfe die Vereinzelungs- und/oder Stapelmodule 16a bis 16d und die Geldkassetten 14a bis 14d gesteuert werden und mit elektrischer Energie versorgt werden. Alternativ kann die Steuerungs- und die Spannungsversorgung, d.h. die Versorgung mit elektrischer Energie, auch über zwei getrennte Einheiten erfolgen.

Die Vereinzelungs- und/oder Stapelmodule 16a bis 16d sind über mehrere elektrische Leitungen mit der Steuerungseinheit 26 und untereinander elektrisch leitend verbunden. Ferner sind die Vereinzelungs- und/oder Stapelmodule 16a bis 16d elektrisch leitend mit den Geldkassetten 14a bis 14d verbunden. Die Verbindung der Vereinzelungs- und/oder Stapelmodule 16a bis 16d untereinander und der zentralen Steuerungseinheit 26 ist in Figur 1 über die elektrischen Leitungen 28a bis 28d angedeutet. Hierbei ist jeweils nur eine elektrische Leitung angedeutet, jedes Vereinzelungs- und/oder Stapelmodul 16a bis 16d ist aber über mehrere elektrische Leitungen mit den anderen Bauelementen verbunden. Bei den elektrischen Leitungen 28a bis 28d kann es sich insbesondere um Kabel mit mehreren innenliegenden Drähten und/oder einzelne Drähte, sogenannte Aderleitungen, handeln.

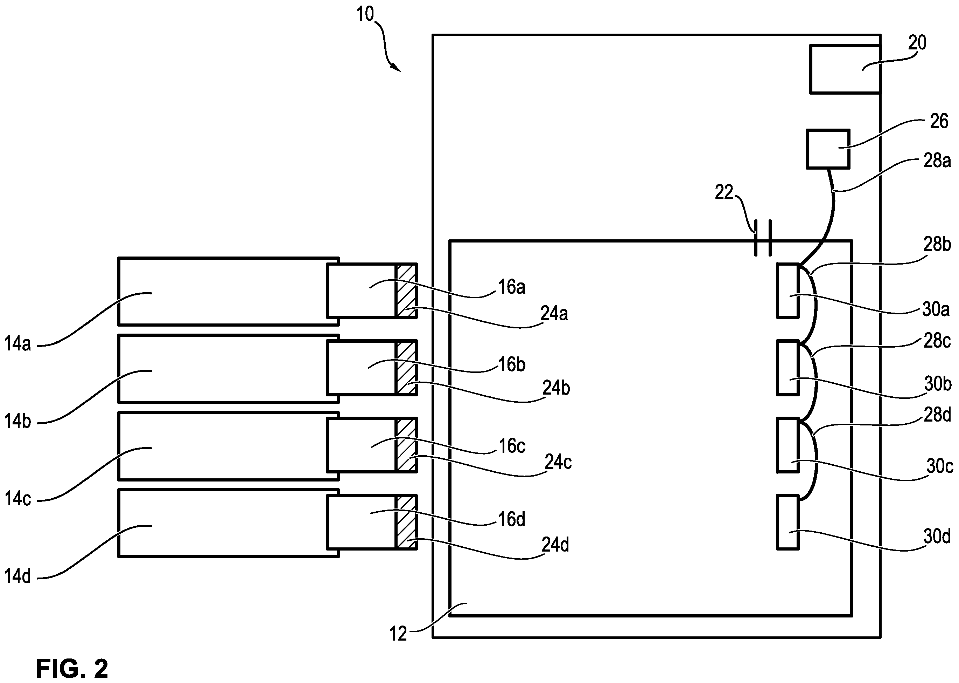

Um den Geldautomaten 10 warten zu können, müssen die Geldkassetten 14a bis 14d und die Vereinzelungs- und/oder Stapelmodule 16a bis 16d aus dem Tresor 12 und dem Geldautomaten 10 entnommen werden. Hierbei müssen die Vereinzelungs- und/oder Stapelmodule 16a bis 16d von den elektrischen Leitungen 28a bis 28d getrennt werden. In Figur 2 ist eine schematische Darstellung eines solchen Wartungszustands des Geldautomaten 10 gezeigt. Elemente mit gleichem Aufbau oder gleicher Funktion haben dieselben Bezugszeichen.

Um die Vereinzelungs- und/oder Stapelmodule 16a bis 16d auf einfache Weise aus dem Geldautomaten 10 entnehmen zu können, sind die elektrischen Leitungen 28a bis 28d mit Steckverbindern verbunden, sodass die erforderlichen Verbindungen zwischen dem jeweiligen Vereinzelungs- und/oder Stapelmodul 16a bis 16d und der jeweiligen elektrischen Leitung 28a bis 28d auf einfache Weise hergestellt und wieder getrennt werden können. Wie bereits erwähnt, ist jedes Vereinzelungs- und/oder Stapelmodul 16a bis 16d mit mehreren elektrischen Leitungen 28a bis 28d verbunden. Hierbei ist nicht jede elektrische Leitung 28a bis 28d über eine eigene Steckverbindung mit der Controllerkarte des jeweiligen Vereinzelungs- und/oder Stapelmoduls 16a bis 16d verbunden, sondern alle elektrischen Leitungen, die mit einem Vereinzelungs- und/oder Stapelmodul 16a bis 16d verbunden werden müssen, sind über jeweils eine Steckverbindung mit einem Adapter 30a bis 30d elektrisch leitend verbunden, wobei der jeweilige Adapter 30a bis 30d über eine einzige Steckverbindung mit der Controllerkarte des jeweiligen Vereinzelungs- und/oder Stapelmoduls 16a bis 16d verbunden werden kann.

Hierdurch wird erreicht, dass beim Übergang vom Betriebszustand in den Wartungszustand nur eine einzige Steckverbindung gelöst werden muss und beim Übergang vom Wartungs- in den Betriebszustand, also nach Beendigung der Wartung, nur eine Steckverbindung zwischen der Controllerkarte und dem jeweiligen Adapter 30a bis 30d hergestellt werden muss. Es für die mit der Wartung beauftragte Person wesentlich einfacher, wenn diese lediglich eine Steckverbindung herstellen muss, anstelle das jede mit dem jeweiligen Vereinzelungs- und/oder Stapelmodul 16a bis 16d zu verbindende elektrische Leitungen 28a bis 28d über eine eigene Steckverbindung auf die Controllerkarte aufgesteckt werden muss.

Der genaue Aufbau der Adapter 30a bis 30d sowie die Verbindung zwischen den Adaptern 30a bis 30d und den Vereinzelungsmodulen 16a bis 16d wird im Zusammenhang mit den folgenden Figuren noch näher beschrieben. Die Adapter 30a bis 30d verbleiben im Wartungsbetriebszustand an den elektrischen Leitungen 28a bis 28d. Die elektrischen Leitungen 28a bis 28d sind insbesondere Bestandteil eines Kabelbaums des Geldautomaten 10.

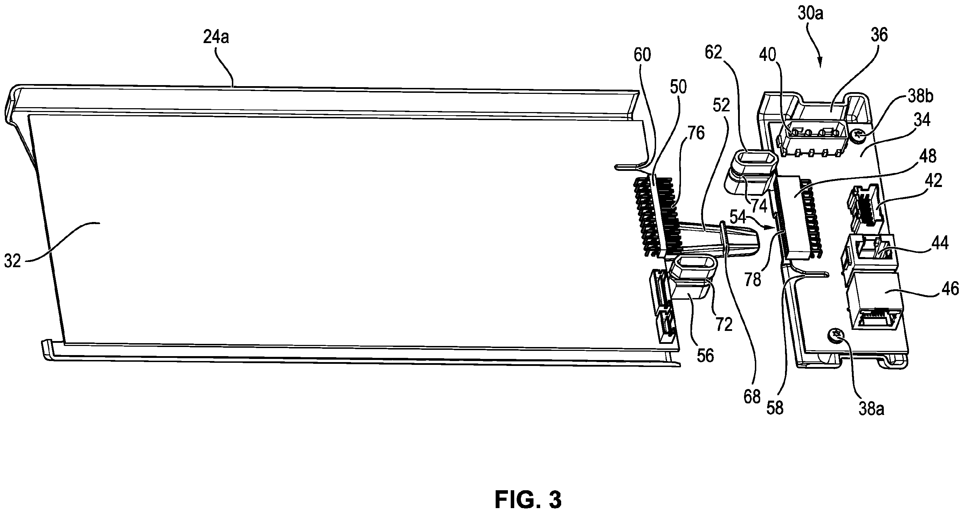

In Figur 3 ist eine schematische perspektivische Darstellung des Abdeckelements 24a des ersten Vereinzelungs- und/oder Stapelmoduls 16a sowie der Controllerkarte 32 des ersten Vereinzelungs- und/oder Stapelmoduls 16a und des ersten Adapters 30a gezeigt. Die Abdeckelemente 24a bis 24d der anderen Vereinzelungs- und/oder Stapelmodule 16b bis 16d, die Controllerkarten der anderen Vereinzelungs- und/oder Stapelmodule 16b bis 16d sowie die anderen Adapter 30b bis 30d sind entsprechend aufgebaut wie für die Bauelemente des Vereinzelungs- und/oder Stapelmoduls 16a in Figur 3 gezeigt. Die Beschreibung des Aufbaus der Abdeckelemente 24a bis 24d der Vereinzelungs- und/oder Stapelmodule 16a bis 16d, der Controllerkarten 32 der Vereinzelungs- und/oder Stapelmodule 16a bis 16d sowie der Steckadapter 30a bis 30d erfolgt daher beispielhaft anhand des Aufbaus des Abdeckelements 24a und der Controllerkarte 32a des ersten Vereinzelungs- und/oder Stapelmoduls 16a sowie des ersten Steckverbinders 30a. Die Ausführungen geltend entsprechend für die jeweiligen Bauteile der anderen Vereinzelungs- und/oder Stapelmodule 16b bis 16d und der anderen Adapter 30b bis 30d. Zur Vereinfachung der Beschreibung wird im Folgenden das erste Abdeckelement 24a des ersten Vereinzelungs- und/oder Stapelmoduls 16a kurz als Abdeckelement 24a des Vereinzelungs- und/oder Stapelmoduls 16a bezeichnet, die erste Controllerkarte 32 des ersten Vereinzelungs- und/oder Stapelmoduls 16a als Controllerkarte 32 des Vereinzelungs- und/oder Stapelmoduls 16a, sowie der erste Adapter 30a als Adapter 30a bezeichnet.

Bei einer alternativen Ausführungsform der Erfindung können die Controllerkarten 32 der verschiedenen Vereinzelungs- und/oder Stapelmodule 16a bis 16d auch unterschiedlich aufgebaut sein. Ebenso können die verschiedenen Steckadapter 30a bis 30d unterschiedlich aufgebaut sein. Insbesondere können die einzelnen Steckadapter 30a bis 30d an die individuellen Gegebenheiten der einzelnen Vereinzelungs- und/oder Stapelmodule 16a bis 16d angepasst werden. Es ist allerdings vorteilhaft, die Steckadapter 30a bis 30d baugleich auszubilden, da hierdurch nur eine Sorte von Bauteilen hergestellt werden muss, wodurch die Herstellungskosten reduziert werden und die Teilevielfalt minimiert wird, sodass weniger Teile als Ersatzteile vorgehalten werden müssen.

In Figur 3 ist der Blick auf die Innenseite der Bauteile 24a, 32, 30a gezeigt, wobei die Innenseite diejenige Seite ist, die im montierten Zustand dem Vereinzelungs- und/oder Stapelmodul 16a zugewandt ist, wohingegen die Außenseite diejenige Seite ist, die der Tresorwand zugewandt ist.

Der Adapter 30a umfasst eine Leiterplatte 34 sowie ein über zwei Schrauben 38a, 38b mit der Leiterplatte 34 verbundenes Abdeckelement 36. Auf der Leiterplatte 34 sind fünf Steckverbinder 40 bis 48 angeordnet, wobei die vier Steckverbinder 40 bis 46 über Leiterbahnen der Leiterplatte 34 elektrisch leitend mit dem fünften Steckverbinder 48 verbunden sind. Der erste Steckverbinder 40 dient zur Verbindung des Adapters 30a mit einer Spannungsversorgungseinheit und ist somit letztendlich zur Versorgung des ersten Vereinzelungs- und/oder Stapelmoduls 16a mit elektrischer Energie vorgesehen. Hierzu wird ein komplementär zum ersten Steckverbinder 40 ausgebildeter nicht dargestellter sechster Steckverbinder, der an einem Ende einer mit der Spannungsversorgungseinheit verbundenen elektrischen Leitung angeordnet ist, in den ersten Steckverbinder 40 zur Erzeugung einer Steckverbindung gesteckt, sodass die Steckverbinder elektrisch leitend miteinander verbunden sind.

Über den zweiten Steckverbinder 42 ist eine Steckverbindung zu einer mit der dem ersten Vereinzelungs- und/oder Stapelmodul 16a zugeordneten Geldkassette 14a verbundenen elektrischen Leitung herstellbar. Über diese Steckverbindung können sowohl elektrische Signale, insbesondere Daten, als auch elektrische Energie zur Versorgung von in der Geldkassette 14a vorhandenen elektrischen Verbrauchern zwischen der Geldkassette 14a und dem Adapter 30a übertragen werden. Der dritte und der vierte Steckverbinder 44, 46 dienen jeweils zur Herstellung einer BUS-Verbindung zwischen der Controllerkarte 32 und dem Adapter 30a und somit dem ersten Vereinzelungs- und/oder Stapelmodul 16a und einem weiteren Modul 16b bis 16d, 26. Der Adapter 30a ist insbesondere über den dritten Steckverbinder 44 elektrisch leitend mit der zentralen Steuerungseinheit 26 und über den vierten Steckverbinder 46 mit dem zweiten Vereinzelungs- und/oder Stapelmodul 16b verbunden, wobei über die durch die Steckverbinder 44, 46 erzeugten Steckverbindungen jeweils elektrische Signale, vorzugsweise mit codierten Daten, insbesondere Steuerungsdaten, übertragen werden.

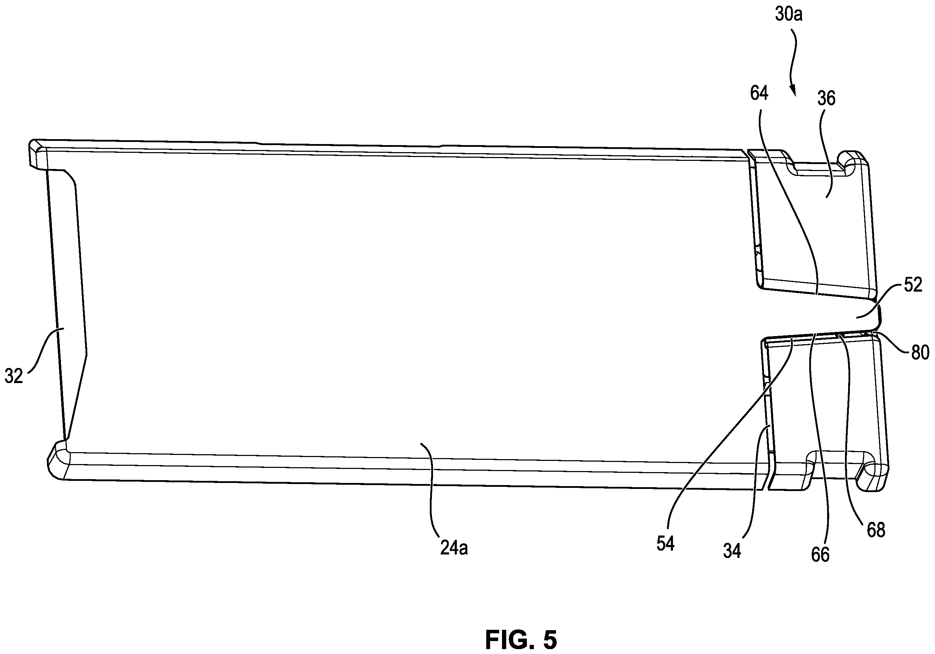

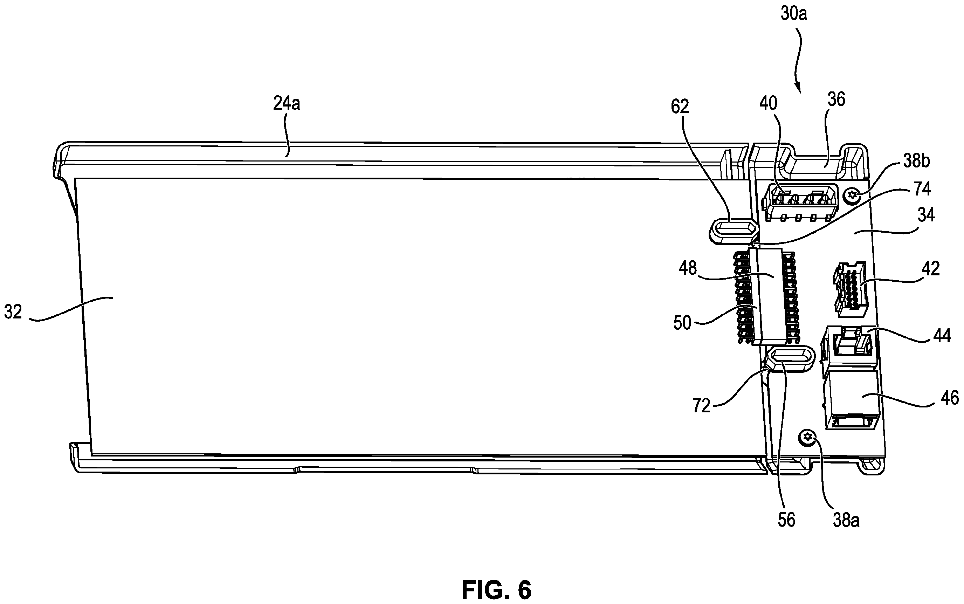

Wie bereits erwähnt, sind die ersten vier Steckverbinder 40 bis 46 über die Leiterbahnen der Leiterplatte 34 mit dem fünften Steckverbinder 48 verbunden. Die Controllerkarte 32 umfasst einen komplementär zum fünften Steckverbinder ausgebildeten siebten Steckverbinder 50. In einem in den Figuren 5 und 6 gezeigten verbundenen Zustand sind der fünfte Steckverbinder 48 und der siebte Steckverbinder 50 ineinander gesteckt, sodass durch sie eine Steckverbindung hergestellt ist und die Kontaktelemente der Steckverbinder 48, 50 elektrisch leitend miteinander verbunden sind. In diesem verbundenen Zustand können alle über die Steckverbinder 40 bis 46 übertragenen elektrischen Signale und elektrischen Versorgungsspannungen über die zwischen dem fünften Steckverbinder 48 und dem siebten Steckverbinder 50 erzeugte Steckverbindung zwischen dem Adapter 30a und der Controllerkarte 32, und somit dem Vereinzelungs- und/oder Stapelmodul 16a, übertragen werden. Somit muss nach einer Wartung des Geldautomaten 10 nur eine einzige Steckverbindung, nämlich die Steckverbindung zwischen dem fünften Steckverbinder 48 und dem siebten Steckverbinder 50, hergestellt werden und es müssen nicht vier Steckverbindungen zwischen der Controllerkarte 32 und den in die ersten vier Steckverbinder 40 bis 46 des Adapters 30a gesteckten Steckverbindern hergestellt werden. Hierdurch wird die Wiederinbetriebnahme des Geldautomaten 10 vereinfacht und es werden Kosten und Zeit eingespart. Umgekehrt muss zur Wartung nur eine Steckverbindung gelöst werden.

Die Steckverbinder 40 bis 48 sind derart auf der Leiterplatte angeordnet, dass die zur Datenübertragung mittels BUS-Verbindung dienenden Steckverbinder 44, 46 möglichst nah an dem fünften Steckverbinder 48 angeordnet sind, sodass die den fünften Steckverbinder 48 mit dem dritten und vierten Steckverbinder 44, 46 verbindenden Leiterbahnen möglichst kurz sind und somit nur geringe Qualitätseinbußen bei der Datenübertragung entstehen. Umgekehrt sind die Steckverbinder 40, 44, 46 derart angeordnet, dass der Abstand zwischen den zur Datenübertragung dienenden Steckverbinder 44, 46 und dem zur Spannungsversorgung dienenden Steckverbinder 40 möglichst groß ist, sodass keine Wechselwirkungen entstehen und die Datenübertragung nicht durch die übertragende elektrische Energie beeinträchtigt wird. Alternativ oder zusätzlich kann eine Abschirmung für die Leiterbahn vorgesehen sein.

Bei einer alternativen Ausführungsform der Erfindung kann der Adapter 30a auch mehr oder weniger als fünf Steckverbinder 40 bis 48 umfassen. Ebenso können die Steckverbinder 40 bis 46 auch mit anderen als den zuvor genannten Bauelementen verbunden sein. So ist beispielsweise bei dem zweiten Adapter 30b der entsprechende dritte Steckverbinder nicht direkt mit der Spannungssteuerungseinheit 26, sondern mit dem ersten Steckverbinder 30a, verbunden.

Ferner umfasst das Abdeckelement 24a ein erstes Verbindungselement 52 und das Abdeckelement 36 ein komplementär zum ersten Verbindungselement 52 ausgebildetes zweites Verbindungselement 54. Darüber hinaus hat das Abdeckelement 24a ein erstes Führungselement 56, die Leiterplatte 34 ein zweites Führungselement 58, die Controllerkarte 32 ein drittes Führungselement 60 und das Abdeckelement 36 ein viertes Führungselement 62. Die Verbindungselemente 52, 54 und die Führungselemente 56 bis 62 dienen zum einen zur Verbindung des Adapters 30a mit dem Abdeckelement 24a und der Controllerkarte 32 und somit des Vereinzelungs- und/oder Stapelmoduls 16a. Ferner dienen die Verbindungselemente 52, 54 sowie die Führungselemente 56 bis 62 zur Führung des Adapters 30a relativ zum Vereinzelungs- und/oder Stapelmodul 16a bei dem Aufstecken des Adapters 30a auf das Vereinzelungs- und/oder Stapelmodul 16b.

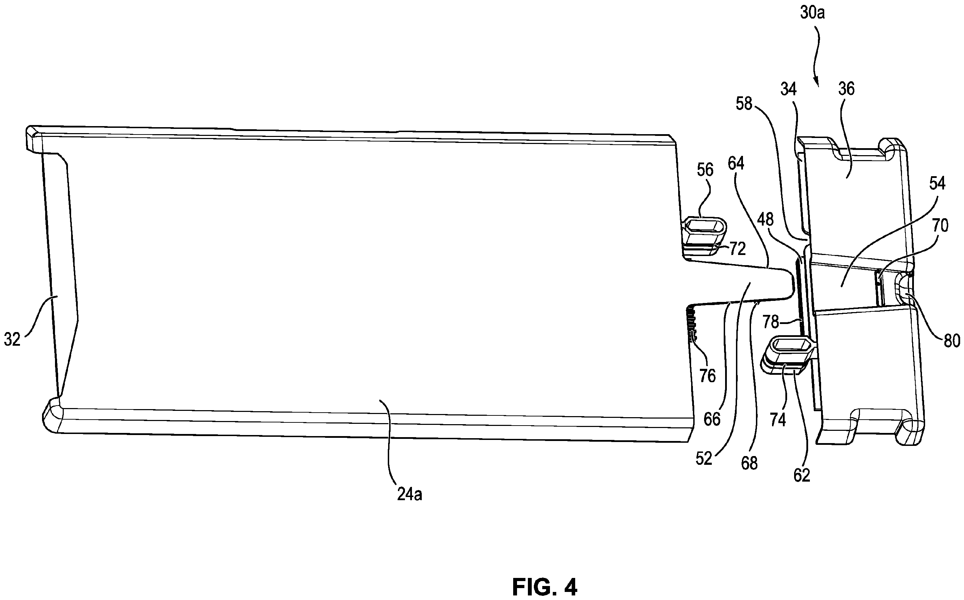

In Figur 4 ist eine schematische perspektivische Darstellung der Abdeckplatte 24a und der Controllerkarte 32 des ersten Vereinzelungs- und/oder Stapelmoduls 16a sowie des Adapters 30a mit Blick auf die Rückseite gezeigt. In Figur 4 ist die Ausbildung des zweiten Verbindungselements 54 gut erkennbar. Das erste Führungselement 52 ist in Form einer seitlich in der Richtung des Adapters 30a von dem Abdeckelement 24a abstehenden Nase ausgebildet, wobei sich das erste Führungselement 52 in der dem Abdeckelement 24a abgewandten Richtung verjüngt. Die beiden seitlichen Schenkel 64, 66 des ersten Führungselements 52 schließen insbesondere einen Winkel im Bereich zwischen 5° und 15°, vorzugsweise einen Winkel von 10°, ein.

Das erste Verbindungselement 52 weist auf der dem Vereinzelungs- und/oder Stapelmodul 16a zugewandten Seite eine Erhebung 68 auf, wohingegen das zweite Verbindungselement 54 eine komplementär zur Erhebung 68 ausgebildete Nut 70 hat. Das erste Verbindungselement 52 ist elastisch verformbar, sodass beim Aufstecken des Adapters 30a auf das Vereinzelungs- und/oder Stapelmodul 16a das erste Verbindungselement 52 elastisch verformt werden kann, sodass die Erhebung 68 zur Verbindung des Adapters 30a mit dem Abdeckelement 24a in die Nut 70 des zweiten Verbindungselementes 54 einrastet. Zum Lösen der Rastverbindung zwischen dem ersten Verbindungselement 52 und dem zweiten Verbindungselement 54 wird das erste Verbindungselement 52 manuell von dem Adapter 30a weggebogen und soweit elastisch verformt, bis die Erhebung 68 nicht mehr mit der Nut 70 in Eingriff steht und der Adapter 30a somit von dem Vereinzelungs- und/oder Stapelmodul 16a abgezogen werden kann.

In dem verbundenen Zustand, d.h. wenn das erste Verbindungselement 52 und das zweite Verbindungselement 54 miteinander verbunden sind, sind auch der fünfte Steckverbinder 48 und der siebte Steckverbinder 50 elektrisch leitend miteinander verbunden, sodass die Steckverbindung zwischen dem fünften und dem siebten Steckverbinder 48, 50 hergestellt ist.

Das erste Verbindungselement 52 und das zweite Verbindungselement 54 dienen aber nicht nur zur Verbindung des Adapters 30a und des Vereinzelungs- und/oder Stapelmoduls 16a im verbundenen Zustand, sondern dienen auch zur Führung des Adapters 30a relativ zum Vereinzelungsmodul 16a beim Aufstecken des Adapters 30a. Durch die Verjüngung des ersten Führungselements 52 und die entsprechende Verjüngung des komplementär ausgebildeten zweiten Führungselements 54 wird erreicht, dass der Adapter 30a blind aufgesteckt werden kann und hierbei so geführt wird, dass im verbundenen Zustand die Steckverbindung zwischen dem fünften Steckverbinder 48 und dem siebten Steckverbinder 50 besteht. Hierdurch wird erreicht, dass der Adapter auch bei engen Verhältnissen und/oder dann, wenn kein Sichtkontakt besteht, auf einfache Weise aufgesteckt werden kann. Hierdurch wird die Montage vereinfacht und Zeit eingespart.

Die Führung des Adapters 30a relativ zum Vereinzelungs- und/oder Stapelmodul 16a durch das erste und das zweite Verbindungselement 52, 54 wird auch als Grobführung bezeichnet, da diese bereits eine Führung bewirkt, wenn der Abstand zwischen dem Adapter 30a und dem Vereinzelungs- und/oder Stapelmodul 16a noch relativ groß ist, wohingegen durch die vier Führungselemente 56 bis 62 zusätzlich zu der Grobführung eine Feinführung bewirkt wird, wobei diese Feinführung des Adapters 30a relativ zum Vereinzelungs- und/oder Stapelmodul 16a erst dann erfolgt, wenn der Adapter 30a sich schon relativ nah an der Position befindet, an der er im verbundenen Zustand angeordnet ist.

Hierzu sind das zweite Führungselement 58 und das dritte Führungselement 60 jeweils als ein Schlitz in der Leiterplatte 34 bzw. der Controllerkarte 32 ausgebildet. Das erste Führungselement 56 und das vierte Führungselement 62 weisen eine umlaufende Vertiefung 72, 74 auf, wobei im verbundenen Zustand die Führungselemente 56, 62 mit den Stellen, an denen die Nuten 72, 74 ausgebildet sind, mit den Schlitzen 50, 60 in Eingriff stehen, sodass der Adapter 30a relativ zum Vereinzelungs- und/oder Stapelmodul 16a fixiert ist. Durch die Führungselemente 56 bis 62 wird der Adapter 30a beim Aufstecken derart geführt, dass die Stifte 76 des siebten Steckverbinders 70 parallel zu den Aufnahmebereichen 78 des fünften Steckverbinders 74 beim Aufstecken des Adapters 30a auf das Vereinzelungs- und/oder Stapelmodul 16a geführt werden, sodass die Steckverbindung zwischen dem fünften Stecker 48 und dem siebten Stecker 50 auf einfache Weise hergestellt werden kann. Insgesamt wird durch die Grobführung durch das erste und das zweite Verbindungselement 52, 54 sowie durch die Feinführung durch die Führungselemente 56 bis 62 eine selbstfindende Steckverbindung ausgebildet.

Bei einer alternativen Ausführungsform der Erfindung kann der Adapter 30a auch lediglich über die Verbindungselemente 52, 54 mit dem Vereinzelungs- und/oder Stapelmodul 16a verbunden werden und lediglich hierdurch eine Führung bei dem Aufstecken des Adapters 30a auf das Vereinzelungs- und/oder Stapelmodul 16a erfolgen. Bei einer weiteren alternativen Ausführungsform der Erfindung kann der Adapter 30a auch lediglich über die Führungselemente 56 bis 62 beim Aufstecken geführt und im verbundenen Zustand mit dem Vereinzelungs- und/oder Stapelmodul 16a verbunden sein. Ferner kann alternativ an Stelle einer Rastverbindung zwischen dem ersten Verbindungselement 52 und dem zweiten Verbindungselement 54 auch eine Clip- und/oder Steckverbindung zur Befestigung des Adapters 30a an dem Vereinzelungsmodul 16a verwendet werden. Ebenso können mehr oder weniger als vier Führungselemente 56 bis 62 vorgesehen sein.

In Figur 5 ist eine schematische perspektivische Darstellung der Abdeckplatte 24a, der Controllerkarte 32 und des Adapters 30 im verbundenen Zustand mit Blick auf die Außenseite dargestellt. In dem verbundenen Zustand ist die Rastverbindung zwischen dem ersten Verbindungselement 52 und dem zweiten Verbindungselement 54 ausgebildet. Wie in Figur 4 ersichtlich ist, umfasst das zweite Verbindungselement 54 eine Aussparung 80, die dazu dient, dass das erste Verbindungselement 52 manuell leichter gegriffen werden kann und im verbundenen Zustand derart elastisch verformt werden kann, dass die Rastverbindung zwischen dem ersten Verbindungselement 52 und dem zweiten Verbindungselement 54 auf einfache Weise gelöst werden kann. Hierdurch wird die Handhabung vereinfacht. Das erste Verbindungselement 52 ist insbesondere derart ausgebildet, dass es etwa genauso lang ist, wie der Adapter 30a bereit ist. Auf diese Weise werden eine einfache Handhabung und eine sichere Führung erreicht.

In Figur 6 ist eine schematische perspektivische Darstellung des Abdeckelements 24a, der Controllerkarte 32 und des Adapters 30a im verbundenen Zustand mit Blick auf die Innenseite gezeigt. In diesem verbundenen Zustand sind das erste Führungselement 56 und das zweite Führungselement 58 sowie das dritte Führungselement 60 und das vierte Führungselement 62 miteinander in Eingriff.

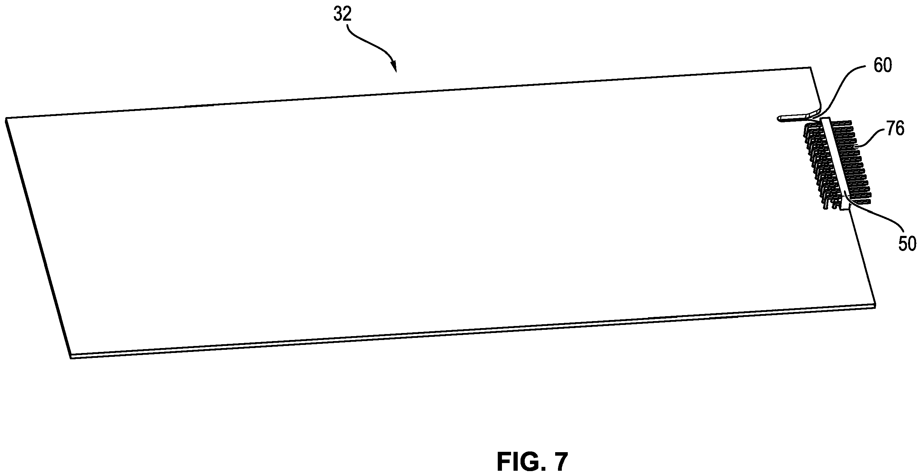

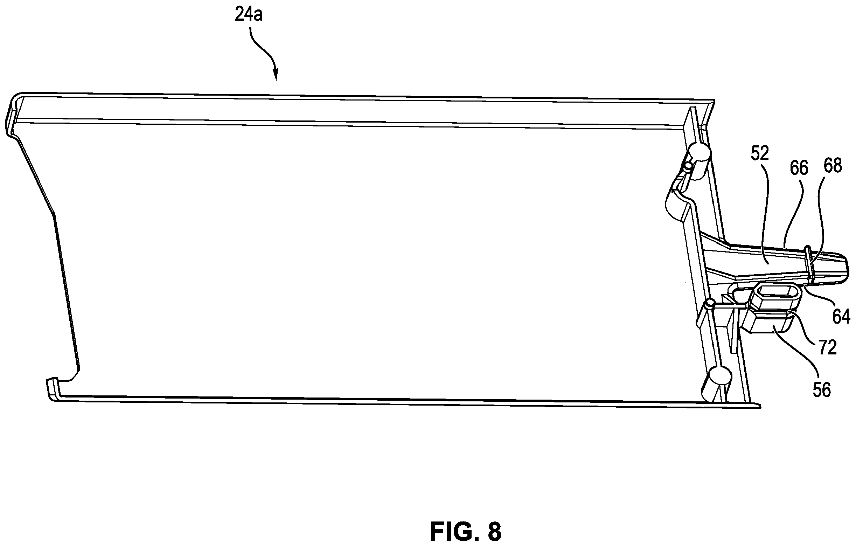

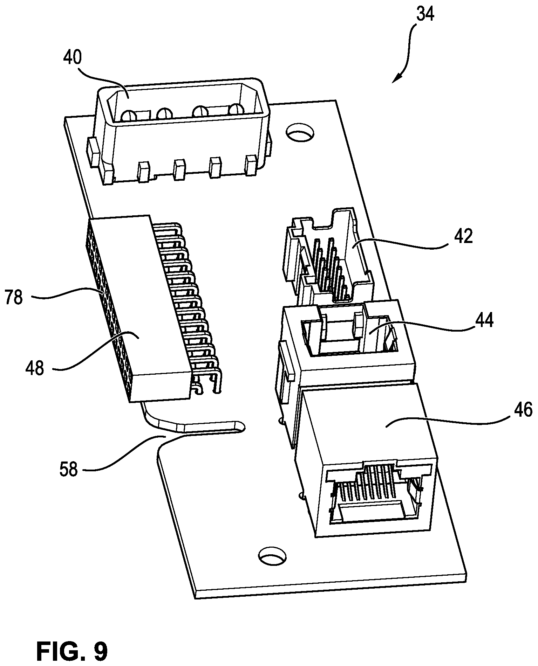

In Figur 7 ist eine schematische perspektivische Darstellung der Controllerkarte 32 gezeigt. Figur 8 zeigt eine schematische perspektivische Darstellung der Abdeckplatte 24a. In Figur 9 ist eine schematische perspektivische Darstellung der Leiterplatte 34 des Adapters 30a dargestellt.

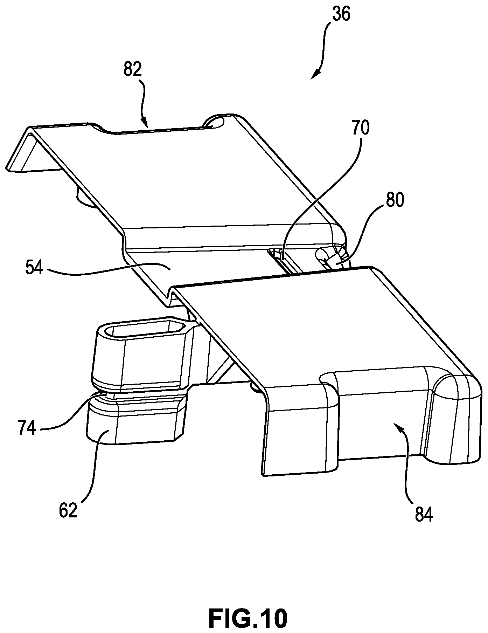

Figur 10 zeigt eine schematische perspektivische Darstellung des Abdeckelements 36 des Adapters 30a. Das Abdeckelement 36 weist an zwei entgegengesetzten Enden jeweils eine Aussparung 82, 84 auf, die als Griff dient, sodass die mit der Wartung betraute Person den Adapter 30a leichter greifen kann. Hierdurch wird die Handhabung vereinfacht.

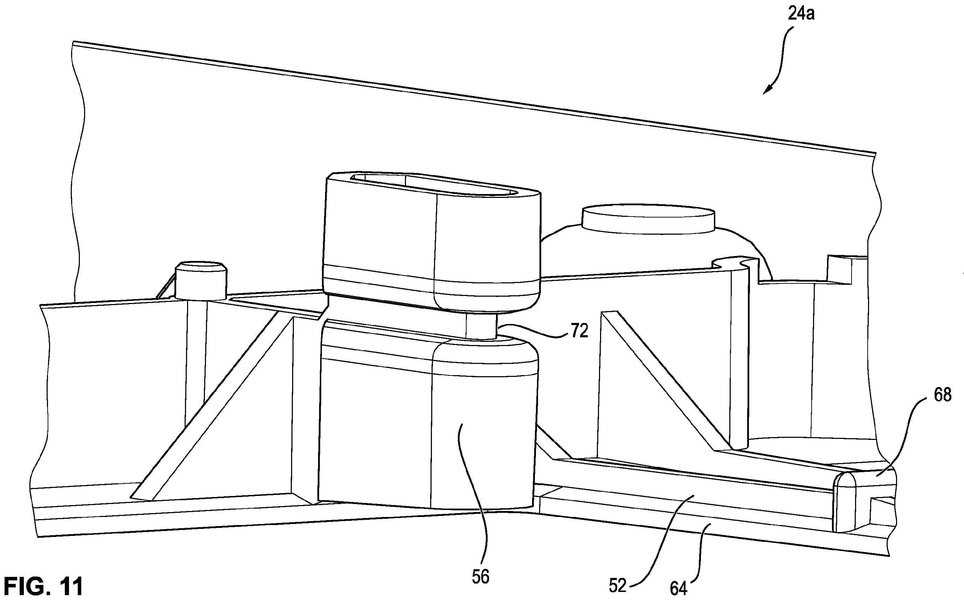

In Figur 11 ist eine schematische perspektivische Darstellung eines Ausschnitts des Abdeckelements 24a nach Figur 8 gezeigt. Figur 11 verdeutlicht hierbei insbesondere die Form des ersten Führungselements 56.

Alternativ kann der zuvor beschriebene Adapter 30a nicht nur bei Geldautomaten 10 sondern auch bei anderen wartungsintensiven Selbstbedienungsgeräten eingesetzt werden. Insbesondere sind der Einsatz des zuvor beschriebenen Adapters und die entsprechende Ausgestaltung des komplementären Elements, auf dem der Adapter aufgesetzt wird, dann sinnvoll, wenn die Montage des Adapters bei geringem Bauraum und/oder ohne Sichtkontakt erfolgen muss.

### Bezugszeichenliste

- 10: Geldautomat
- 12: Tresor
- 14a bis 14d: Geldkassette
- 16a bis 16d: Vereinzelungs- und/oder Stapelmodul
- 18: Transportpfad
- 20: Ein- und Ausgabefach
- 22: Übergabeschlitz
- 24a bis 24d: Abdeckelement
- 26: Steuerungseinheit
- 28a bis 28d: elektrische Leitung
- 30a bis 30d: Adapter
- 32: Controllerkarte
- 34: Leiterplatte
- 36: Abdeckelement
- 38a, 38b: Schrauben
- 40 bis 50: Steckverbinder
- 52, 54: Verbindungselement
- 56 bis 62: Führungselement
- 64, 66: Schenkel
- 68: Erhebung
- 70, 72, 74: Nut
- 76: Stift
- 78: Aufnahmebereich
- 80, 82, 84: Aussparung

## Patentansprüche

1. Vorrichtung zur Handhabung von Wertscheinen,
mit einer zentralen Spannungsversorgungseinheit (26), die mit einem ersten Ende einer ersten elektrischen Leitung zur Übertragung von elektrischer Energie mit einem ersten Modul (16a) elektrisch leitend verbunden ist, wobei das dem ersten Ende entgegengesetzte zweite Ende der ersten elektrischen Leitung mit einem ersten Steckverbinder verbunden ist,
wobei das erste Modul (16a) ein Vereinzelungs- und/oder Stapelmodul zum Zuführen von Wertscheinen zu einer Geldkassette (14a) und/oder zur Entnahme von Wertscheinen aus der Geldkassette (14a) ist,
mit mindestens einem zweiten Modul, das mit einem ersten Ende einer zweiten elektrischen Leitung zur Übertragung von elektrischen Signalen zwischen dem ersten Modul (16a) und dem zweiten Modul elektrisch leitend verbunden ist, wobei das dem ersten Ende entgegengesetzte zweite Ende der zweiten elektrischen Leitung mit einem zweiten Steckverbinder verbunden ist,
wobei in einem Betriebszustand das erste Modul (16a) in einer Betriebsposition innerhalb der Vorrichtung (10) angeordnet ist und elektrisch leitend mit der ersten elektrischen Leitung und der zweiten elektrischen Leitung verbunden ist, und
wobei in einem Wartungszustand das erste Modul (16a) aus seiner Betriebsposition bewegt ist und weder mit der ersten elektrischen Leitung noch der zweiten elektrischen Leitung elektrisch leitend verbunden ist,
**dadurch gekennzeichnet, dass** ein Adapter (30a) vorgesehen ist, der einen komplementär zum ersten Steckverbinder ausgebildeten dritten Steckverbinder (40), einen komplementär zum zweiten Steckverbinder ausgebildeten vierten Steckverbinder (44) und mindestens einen fünften Steckverbinder (48) umfasst,
dass der fünfte Steckverbinder (48) elektrisch leitend mit dem dritten Steckverbinder (40) und elektrisch leitend mit dem vierten Steckverbinder (44) verbunden ist,
dass das erste Modul (16a) einen komplementär zum fünften Steckverbinder (48) ausgebildeten sechsten Steckverbinder (50) umfasst,
dass im Betriebszustand der fünfte Steckverbinder (48) mit dem sechsten Steckverbinder (50) elektrisch leitend verbunden ist, und
dass über diese zwischen dem fünften Steckverbinder (48) und dem sechsten Steckverbinder (50) ausgebildete Steckverbindung sowohl die über die erste elektrische Leitung übertragbare elektrische Energie als auch die über die zweite elektrische Leitung übertragbaren elektrischen Signale übertragbar sind; wobei die Geldkassette (14a) mit einem ersten Ende einer dritten elektrischen Leitung zur Übertragung von elektrischer Energie und/oder Steuerungssignalen verbunden ist, wobei das dem ersten Ende entgegengesetzte zweite Ende der dritten elektrischen Leitung mit einem siebten Steckverbinder verbunden ist, wobei der Adapter (30a) einen elektrisch leitend mit dem fünften Steckverbinder (48) verbundenen komplementär zum siebten Steckverbinder ausgebildeten achten Steckverbinder (42) umfasst, und wobei über die Steckverbindung zwischen dem fünften Steckverbinder (48) und dem sechsten Steckverbinder (50) über die dritte elektrische Leitung übertragbare elektrische Energie und/oder Steuerungssignale übertragbar sind.

2. Vorrichtung nach Anspruch 1, **dadurch gekennzeichnet, dass** das zweite Modul ein zum ersten Modul (16a) gleichartiges Modul (16b) oder eine zentrale Steuerungseinheit zur Verarbeitung der elektrischen Signale ist.

3. Vorrichtung (10) nach einem der vorhergehenden Ansprüche, **dadurch gekennzeichnet, dass** die zweite elektrische Leitung eine Datenleitung zum Bereitstellen einer BUS-Verbindung zwischen dem ersten Modul (16a) und dem zweiten Modul (16b) ist.

4. Vorrichtung (10) nach einem der vorhergehenden Ansprüche, **dadurch gekennzeichnet, dass** der dritte Steckverbinder (40), der vierte Steckverbinder (44) und der fünfte Steckverbinder (48) auf einer Leiterplatte (34) angeordnet sind, und dass der dritte Steckverbinder (40) und der fünfte Steckverbinder (48) sowie der vierte Steckverbinder (44) und der fünfte Steckverbinder (48) über Leiterbahnen der Leiterplatte (34) elektrisch leitend miteinander verbunden sind.

5. Vorrichtung (10) nach Anspruch 4, **dadurch gekennzeichnet, dass** die Länge der den vierten Steckverbinder (44) mit dem fünften Steckverbinder (48) verbindenden Leiterbahn einen Wert im Bereich zwischen 5mm und 50mm, insbesondere im Bereich zwischen 8mm und 20mm, hat.

6. Vorrichtung (10) nach einem der vorhergehenden Ansprüche, **dadurch gekennzeichnet, dass** der Abstand zwischen dem dritten Steckverbinder (40) und dem vierten Steckverbinder (44) einen Wert im Bereich zwischen 40mm und 70mm, insbesondere zwischen 45mm und 60mm, hat.

7. Vorrichtung (10) nach einem der vorhergehenden Ansprüche, **dadurch gekennzeichnet, dass** die Vorrichtung (10) ein drittes Modul umfasst, das mit einem ersten Ende einer vierten elektrischen Leitung zur Übertragung von elektrischen Signalen zwischen dem ersten Modul (16a) und dem dritten Modul elektrisch leitend verbunden ist, dass ein dem ersten Ende entgegengesetztes zweites Ende der vierten elektrischen Leitung mit einem neunten Steckverbinder verbunden ist, dass der Adapter (30a) einen elektrisch leitend mit dem fünften Steckverbinder (48) verbundenen komplementär zum neunten Steckverbinder ausgebildeten zehnten Steckverbinder (46) umfasst, und dass über die Steckverbindung zwischen dem fünften Steckverbinder (48) und dem sechsten Steckverbinder (50) über die vierte elektrische Leitung übertragbare elektrische Signale übertragbar sind.

8. Vorrichtung (10) nach Anspruch 7, **dadurch gekennzeichnet, dass** das erste Modul (16a) ein erstes Vereinzelungs- und/oder Stapelmodul zum Zuführen von Wertscheinen zu einer ersten Geldkassette (14a) und/oder zur Entnahme von Wertscheinen aus der ersten Geldkassette (14a), das zweite Modul (16b) ein zweites Vereinzelungs- und/oder Stapelmodul zum Zuführen von Wertscheinen zu einer zweiten Geldkassette (14b) und/oder zur Entnahme von Wertscheinen aus der zweiten Geldkassette (14b) und das dritte Modul (16c) ein drittes Vereinzelungs- und/oder Stapelmodul zum Zuführen von Wertscheinen zu einer dritten Geldkassette (14c) und/oder zur Entnahme von Wertscheinen aus der dritten Geldkassette (14c) ist.

9. Vorrichtung (10) nach einem der vorhergehenden Ansprüche, **dadurch gekennzeichnet, dass** alle an das erste Modul (16a) übertragenen und von dem ersten Modul (16a) ausgehenden elektrischen Signale und die gesamte an das erste Modul (16a) übertragene und von dem ersten Modul (16a) abgegebene elektrische Energie im Betriebszustand über die Steckverbindung zwischen dem fünften Steckverbinder (48) und dem sechsten Steckverbinder (50) übertragen werden.

10. Vorrichtung (10) nach einem der vorhergehenden Ansprüche, **dadurch gekennzeichnet, dass** das erste Modul (16a) ein erstes Abdeckelement (24a) umfasst, dass der Adapter (30a) ein zweites Abdeckelement (36) umfasst, dass im Betriebszustand das erste Abdeckelement (24a) und das zweite Abdeckelement (36) miteinander verbunden sind, und dass im Wartungszustand das erste Abdeckelement (24a) und das zweite Abdeckelement (36) voneinander getrennt sind.

11. Vorrichtung (10) nach Anspruch 10, **dadurch gekennzeichnet, dass** das erste Abdeckelement (24a) ein elastisches erstes Verbindungselement (52) umfasst, dass das zweite Abdeckelement (36) ein komplementär zum ersten Verbindungselement (52) ausgebildetes zweites Verbindungselement (54) umfasst, und dass im Betriebszustand das erste Abdeckelement (24a)und das zweite Abdeckelement (36) über eine zwischen dem ersten Verbindungselement (52) und dem zweiten Verbindungselement (54) ausgebildete Clip-Verbindung miteinander verbunden sind.

12. Vorrichtung (10) nach einem der Ansprüche 10 oder 11, **dadurch gekennzeichnet, dass** das erste Verbindungselement (52) sich in der dem ersten Abdeckelement (24a) abgewandten Richtung verjüngt, insbesondere gleichmäßig verjüngt.

13. Vorrichtung (10) nach einem der Ansprüche 10 bis 12, **dadurch gekennzeichnet, dass** das erste Abdeckelement (24a) eine erstes Führungselement (56) umfasst, dass der Adapter (30a) ein komplementär zum ersten Führungselement (56) ausgebildetes zweites Führungselement (58) umfasst, wobei beim Verbinden des ersten Abdeckelements (24a) und des zweiten Abdeckelements (36) das erste Führungselement (56) und das zweite Führungselement (58) zumindest zeitweise miteinander im Eingriff sind und das erste Abdeckelement (24a) und das zweite Abdeckelement (36) durch den Kontakt zwischen dem ersten Führungselement (56) und dem zweiten Führungselement (58) relativ zueinander geführt sind, und/oder dass das zweite Abdeckelement (36) ein drittes Führungselement (62) umfasst, und dass das erste Modul (16a) ein komplementär zum dritten Führungselement (62) ausgebildetes viertes Führungselement (60) umfasst, wobei beim Verbinden des ersten Abdeckelements (24a) und des zweiten Abdeckelements (36) das dritte Führungselement (62) und das vierte Führungselement(60) zumindest zeitweise miteinander im Eingriff sind und das erste Abdeckelement (24a) und das zweite Abdeckelement (36) durch den Kontakt zwischen dem dritten Führungselement (62) und dem vierten Führungselement (60) relativ zueinander geführt sind.

## Claims

1. Apparatus for handling value documents,
having a central voltage supply unit (26) which is connected in an electrically conductive manner to a first module (16a) using a first end of a first electrical line for transmitting electrical energy, wherein the second end of the first electrical line which is opposite the first end is connected to a first plug connector, wherein the first module (16a) is a separating and/or stacking module for supplying value documents to a cashbox (14a) and/or for removing value documents from the cashbox (14a),
having at least one second module which is connected in an electrically conductive manner to a first end of a second electrical line for transmitting electrical signals between the first module (16a) and the second module, wherein the second end of the second electrical line which is opposite the first end is connected to a second plug connector,
wherein, in an operating state, the first module (16a) is arranged in an operating position inside the apparatus (10) and is connected in an electrically conductive manner to the first electrical line and to the second electrical line, and
wherein, in a maintenance state, the first module (16a) is moved from its operating position and is not connected in an electrically conductive manner either to the first electrical line or to the second electrical line,
**characterized in that** an adapter (30a) is provided and comprises a third plug connector (40) complementary to the first plug connector, a fourth plug connector (44) complementary to the second plug connector and at least one fifth plug connector (48),
**in that** the fifth plug connector (48) is connected in an electrically conductive manner to the third plug connector (40) and is connected in an electrically conductive manner to the fourth plug connector (44),
**in that** the first module (16a) comprises a sixth plug connector (50) complementary to the fifth plug connector (48),
**in that**, in the operating state, the fifth plug connector (48) is connected in an electrically conductive manner to the sixth plug connector (50), and
**in that** both the electrical energy which can be transmitted via the first electrical line and the electrical signals which can be transmitted via the second electrical line can be transmitted via this plug connection formed between the fifth plug connector (48) and the sixth plug connector (50); wherein the cashbox (14a) is connected to a first end of a third electrical line for transmitting electrical energy and/or control signals, wherein the second end of the third electrical line which is opposite the first end is connected to a seventh plug connector, wherein the adapter (30a) comprises an eighth plug connector (42) which is connected in an electrically conductive manner to the fifth plug connector (48) and is complementary to the seventh plug connector, and wherein electrical energy and/or control signals which can be transmitted via the third electrical line can be transmitted via the plug connection between the fifth plug connector (48) and the sixth plug connector (50).

2. Apparatus according to Claim 1, **characterized in that** the second module is a module (16b) which is identical to the first module (16a) or is a central control unit for processing the electrical signals.

3. Apparatus (10) according to one of the preceding claims, **characterized in that** the second electrical line is a data line for providing a bus connection between the first module (16a) and the second module (16b) .

4. Apparatus (10) according to one of the preceding claims, **characterized in that** the third plug connector (40), the fourth plug connector (44) and the fifth plug connector (48) are arranged on a printed circuit board (34), and **in that** the third plug connector (40) and the fifth plug connector (48) as well as the fourth plug connector (44) and the fifth plug connector (48) are connected to one another in an electrically conductive manner via conductor tracks of the printed circuit board (34).

5. Apparatus (10) according to Claim 4, **characterized in that** the length of the conductor track connecting the fourth plug connector (44) to the fifth plug connector (48) has a value in the range between 5 mm and 50 mm, in particular in the range between 8 mm and 20 mm.

6. Apparatus (10) according to one of the preceding claims, **characterized in that** the distance between the third plug connector (40) and the fourth plug connector (44) has a value in the range between 40 mm and 70 mm, in particular between 45 mm and 60 mm.

7. Apparatus (10) according to one of the preceding claims, **characterized in that** the apparatus (10) comprises a third module which is connected in an electrically conductive manner to a first end of a fourth electrical line for transmitting electrical signals between the first module (16a) and the third module, **in that** a second end of the fourth electrical connection which is opposite the first end is connected to a ninth plug connector, **in that** the adapter (30a) comprises a tenth plug connector (46) which is connected in an electrically conductive manner to the fifth plug connector (48) and is complementary to the ninth plug connector, and **in that** electrical signals which can be transmitted via the fourth electrical line can be transmitted via the plug connection between the fifth plug connector (48) and the sixth plug connector (50).

8. Apparatus (10) according to Claim 7, **characterized in that** the first module (16a) is a first separating and/or stacking module for supplying value documents to a first cashbox (14a) and/or for removing value documents from the first cashbox (14a), the second module (16b) is a second separating and/or stacking module for supplying value documents to a second cashbox (14b) and/or for removing value documents from the second cashbox (14b), and the third module (16c) is a third separating and/or stacking module for supplying value documents to a third cashbox (14c) and/or for removing value documents from the third cashbox (14c).

9. Apparatus (10) according to one of the preceding claims, **characterized in that** all electrical signals transmitted to the first module (16a) and coming from the first module (16a) and the entire electrical energy which is transmitted to the first module (16a) and is output by the first module (16a) are transmitted in the operating state via the plug connection between the fifth plug connector (48) and the sixth plug connector (50).

10. Apparatus (10) according to one of the preceding claims, **characterized in that** the first module (16a) comprises a first covering element (24a), **in that** the adapter (30a) comprises a second covering element (36), **in that** the first covering element (24a) and the second covering element (36) are connected to one another in the operating state, and **in that** the first covering element (24a) and the second covering element (36) are separated from one another in the maintenance state.

11. Apparatus (10) according to Claim 10, **characterized in that** the first covering element (24a) comprises an elastic first connecting element (52), **in that** the second covering element (36) comprises a second connecting element (54) complementary to the first connecting element (52), and **in that** the first covering element (24a) and the second covering element (36) are connected to one another in the operating state via a clip connection formed between the first connecting element (52) and the second connecting element (54).

12. Apparatus (10) according to either of Claims 10 and 11, **characterized in that** the first connecting element (52) tapers in the direction facing away from the first covering element (24a), in particular tapers uniformly.

13. Apparatus (10) according to one of Claims 10 to 12, **characterized in that** the first covering element (24a) comprises a first guide element (56), **in that** the adapter (30a) comprises a second guide element (58) complementary to the first guide element (56), wherein, when connecting the first covering element (24a) and the second covering element (36), the first guide element (56) and the second guide element (58) are at least occasionally in engagement with one another and the first covering element (24a) and second covering element (36) are guided relative to one another as a result of the contact between the first guide element (56) and second guide element (58), and/or **in that** the second covering element (36) comprises a third guide element (62), and **in that** the first module (16a) comprises a fourth guide element (60) complementary to the third guide element (62), wherein, when connecting the first covering element (24a) and the second covering element (36), the third guide element (62) and the fourth guide element (60) are at least occasionally in engagement with one another and the first covering element (24a) and second covering element (36) are guided relative to one another as a result of the contact between the third guide element (62) and the fourth guide element (60) .

## Revendications

1. Dispositif de manipulation de papiers fiduciaires, comprenant une unité d'alimentation électrique centrale (26) qui est reliée de manière électriquement conductrice à un premier module (16a) par une première extrémité d'un premier câble électrique destiné à transmettre de l'énergie électrique, la deuxième extrémité du premier câble électrique, opposée à la première extrémité, étant reliée à un premier connecteur à enfichage, le premier module (16a) étant un module de déliassage et/ou d'empilage destiné à acheminer des papiers fiduciaires à une caissette à espèces (14a) et/ou destiné à prélever des papiers fiduciaires de la caissette à espèces (14a), comprenant au moins un deuxième module qui est relié de manière électriquement conductrice à une première extrémité d'un deuxième câble électrique destiné à transmettre des signaux électriques entre le premier module (16a) et le deuxième module, la deuxième extrémité du deuxième câble électrique, opposée à la première extrémité, étant reliée à un deuxième connecteur à enfichage,
dans un état opérationnel, le premier module (16a) étant disposé dans une position opérationnelle à l'intérieur du dispositif (10) et étant relié de manière électriquement conductrice au premier câble électrique et au deuxième câble électrique, et
dans un état de maintenance, le premier module (16a) étant déplacé hors de sa position opérationnelle et n'étant relié de manière électriquement conductrice ni au premier câble électrique, ni au deuxième câble électrique,
**caractérisé en ce qu'**un adaptateur (30a) est présent, lequel comporte un troisième connecteur à enfichage (40) de configuration complémentaire au premier connecteur à enfichage, un quatrième connecteur à enfichage (44) de configuration complémentaire au deuxième connecteur à enfichage et au moins un cinquième connecteur à enfichage (48),
**en ce que** le cinquième connecteur à enfichage (48) est relié de manière électriquement conductrice au troisième connecteur à enfichage (40) et de manière électriquement conductrice au quatrième connecteur à enfichage (44), **en ce que** le premier module (16a) comporte un sixième connecteur à enfichage (50) de configuration complémentaire au cinquième connecteur à enfichage (48), **en ce que** dans l'état opérationnel, le cinquième connecteur à enfichage (48) est relié de manière électriquement conductrice au sixième connecteur à enfichage (50), et
**en ce que**, par le biais de cette liaison par enfichage formée entre le cinquième connecteur à enfichage (48) et le sixième connecteur à enfichage (50), peuvent être transmis à la fois l'énergie électrique transmissible par le biais du premier câble électrique et les signaux électriques transmissibles par le biais du deuxième câble électrique ;
la caissette à espèces (14a) étant reliée à une première extrémité d'un troisième câble électrique destiné à transmettre de l'énergie électrique et/ou des signaux de commande, la deuxième extrémité du troisième câble électrique, opposée à la première extrémité, étant reliée à un septième connecteur à enfichage, l'adaptateur (30a) comportant un huitième connecteur à enfichage (42) complémentaire au septième connecteur à enfichage et relié de manière électriquement conductrice au cinquième connecteur à enfichage (48), et l'énergie électrique et/ou les signaux électriques transmissibles par le biais du troisième câble électrique pouvant être transmis par le biais de la liaison à enfichage entre le cinquième connecteur à enfichage (48) et le sixième connecteur à enfichage (50).

2. Dispositif selon la revendication 1, **caractérisé en ce que** le deuxième module est un module (16b) identique au premier module (16a) ou une unité de commande centrale destinée à traiter les signaux électriques.

3. Dispositif (10) selon l'une des revendications précédentes, **caractérisé en ce que** le deuxième câble électrique est un câble de données destiné à fournir une liaison par bus entre le premier module (16a) et le deuxième module (16b).

4. Dispositif (10) selon l'une des revendications précédentes, **caractérisé en ce que** le troisième connecteur à enfichage (40), le quatrième connecteur à enfichage (44) et le cinquième connecteur à enfichage (48) sont disposés sur un circuit imprimé (34) et **en ce que** le troisième connecteur à enfichage (40) et le cinquième connecteur à enfichage (48) ainsi que le quatrième connecteur à enfichage (44) et le cinquième connecteur à enfichage (48) sont reliés de manière électriquement conductrice entre eux par le biais des pistes conductrices du circuit imprimé (34).

5. Dispositif (10) selon la revendication 4, **caractérisé en ce que** la longueur de la piste conductrice qui relie le quatrième connecteur à enfichage (44) au cinquième connecteur à enfichage (48) possède une valeur dans la plage entre 5 mm et 50 mm, notamment dans la plage entre 8 mm et 20 mm.

6. Dispositif (10) selon l'une des revendications précédentes, **caractérisé en ce que** l'écart entre le troisième connecteur à enfichage (40) et le quatrième connecteur à enfichage (44) possède une valeur dans la plage entre 40 mm et 70 mm, notamment entre 45 mm et 60 mm.

7. Dispositif (10) selon l'une des revendications précédentes, **caractérisé en ce que** le dispositif (10) comporte un troisième module qui est relié de manière électriquement conductrice à une première extrémité d'un quatrième câble électrique destiné à transmettre des signaux électriques entre le premier module (16a) et le troisième module, **en ce qu'**une deuxième extrémité du quatrième câble électrique, opposée à la première extrémité, est reliée à un neuvième connecteur à enfichage, **en ce que** l'adaptateur (30a) comporte un dixième connecteur à enfichage (46) complémentaire au neuvième connecteur à enfichage et relié de manière électriquement conductrice au cinquième connecteur à enfichage (48), et **en ce que** les signaux électriques transmissibles par le biais du quatrième câble électrique peuvent être transmis par le biais de la liaison à enfichage entre le cinquième connecteur à enfichage (48) et le sixième connecteur à enfichage (50).

8. Dispositif (10) selon la revendication 7, **caractérisé en ce que** le premier module (16a) est un premier module de déliassage et/ou d'empilage destiné à acheminer des papiers fiduciaires à une première caissette à espèces (14a) et/ou destiné à prélever des papiers fiduciaires de la première caissette à espèces (14a), le deuxième module (16b) est un deuxième module de déliassage et/ou d'empilage destiné à acheminer des papiers fiduciaires à une deuxième caissette à espèces (14b) et/ou destiné à prélever des papiers fiduciaires de la deuxième caissette à espèces (14b) et le troisième module (16c) est un troisième module de déliassage et/ou d'empilage destiné à acheminer des papiers fiduciaires à une troisième caissette à espèces (14c) et/ou destiné à prélever des papiers fiduciaires de la troisième caissette à espèces (14c).

9. Dispositif (10) selon l'une des revendications précédentes, **caractérisé en ce qu'**à l'état opérationnel, tous les signaux électriques transmis au premier module (16a) et émanant du premier module (16a) ainsi que toute l'énergie électrique transmise au premier module (16a) et délivrée par le premier module (16a) sont transmis par le biais de la liaison par enfichage formée entre le cinquième connecteur à enfichage (48) et le sixième connecteur à enfichage (50).

10. Dispositif (10) selon l'une des revendications précédentes, **caractérisé en ce que** le premier module (16a) comprend un premier élément de recouvrement (24a), **en ce que** l'adaptateur (30a) comprend un deuxième élément de recouvrement (36), **en ce que** dans l'état opérationnel, le premier élément de recouvrement (24a) et le deuxième élément de recouvrement (36) sont reliés l'un à l'autre et **en ce que** dans l'état de maintenance, le premier élément de recouvrement (24a) et le deuxième élément de recouvrement (36) sont séparés l'un de l'autre.

11. Dispositif (10) selon la revendication 10, **caractérisé en ce que** le premier élément de recouvrement (24a) comprend un premier élément de liaison (52) élastique, **en ce que** le deuxième élément de recouvrement (36) comprend un deuxième élément de liaison (54) de configuration complémentaire au premier élément de liaison (52), et **en ce que** dans l'état opérationnel, le premier élément de recouvrement (24a) et le deuxième élément de recouvrement (36) sont reliés l'un à l'autre par le biais d'une liaison par enclipsage formée entre le premier élément de liaison (52) et le deuxième élément de liaison (54).

12. Dispositif (10) selon l'une des revendications 10 ou 11, **caractérisé en ce que** le premier élément de liaison (52) se rétrécit dans la direction à l'opposé du premier élément de recouvrement (24a), notamment se rétrécit de manière régulière.

13. Dispositif (10) selon l'une des revendications 10 à 12, **caractérisé en ce que** le premier élément de recouvrement (24a) comprend un premier élément de guidage (56), **en ce que** l'adaptateur (30a) comprend un deuxième élément de guidage (58) de configuration complémentaire au premier élément de guidage (56), le premier élément de guidage (56) et le deuxième élément de guidage (58) étant au moins partiellement en prise l'un avec l'autre lors de la liaison du premier élément de recouvrement (24a) et du deuxième élément de recouvrement (36), et le premier élément de recouvrement (24a) et le deuxième élément de recouvrement (36) étant guidés l'un par rapport à l'autre par le contact entre le premier élément de guidage (56) et le deuxième élément de guidage (58), et/ou **en ce que** le deuxième élément de recouvrement (36) comprend un troisième élément de guidage (62), et **en ce que** le premier module (16a) comprend un quatrième élément de guidage (60) de configuration complémentaire au troisième élément de guidage (62), le troisième élément de guidage (62) et le quatrième élément de guidage (60) étant au moins partiellement en prise l'un avec l'autre lors de la liaison du premier élément de recouvrement (24a) et du deuxième élément de recouvrement (36), et le premier élément de recouvrement (24a) et le deuxième élément de recouvrement (36) étant guidés l'un par rapport à l'autre par le contact entre le troisième élément de guidage (62) et le quatrième élément de guidage (60).
